# EUROPEAN PATENT APPLICATION

(11) **EP 4 513 612 A1**
(43) Date of publication of application: **26.02.2025**
(21) Application number: 24185340.7
(22) Date of filing: 28.06.2024
(51) Int. Cl.: H01M 10/0587, H01M 50/107, H01M 50/179, H01M 50/559, H01M 50/167, H01M 50/152, H01M 50/342

(54) **SECONDARY BATTERY**

(30) Priority: 25.08.2023 KR 20230111872
(71) Applicant: Samsung SDI Co., Ltd., Yongin-si, Gyeonggi-do 17084 (KR)
(72) Inventor: Chun, Kwan Sic, 17084 Yongin-si, Gyeonggi-do (KR)
(74) Representative: Gulde & Partner

(57) **Abstract**

A secondary battery includes: an electrode assembly including a first electrode plate, a second electrode plate, and a separator, and wound to have a hollow part at a center thereof; a can having a cylindrical shape, of which a first surface is closed, and a second surface is open to accommodate the electrode assembly, the can being electrically connected to the first electrode plate; a cap plate coupled to the second surface of the can; and a terminal passing through the first surface of the can and including an inner portion supported inside the can and an outer portion supported outside the can, the terminal being electrically connected to the second electrode plate, and the hollow part of the electrode assembly has a diameter less than that of the inner portion of the terminal.

## Description

### BACKGROUND

### 1. Field

Aspects of embodiments of the present disclosure relate to a secondary battery.

### 2. Description of the Related Art

Lithium ion secondary batteries are used as power sources for hybrid or electric vehicles, as well as portable electronic devices, because of their advantages of a high operating voltage and a high energy density per unit weight.

Such secondary batteries may be classified into cylindrical, prismatic, and pouch-type secondary batteries in shape. For example, a cylindrical secondary battery is generally constituted by a can that is provided in a cylindrical shape, an electrode assembly that is wound in a cylindrical shape and inserted into the can, an electrolyte that is injected into the can, and a cap assembly that is coupled to the can.

The above-described information disclosed in the technology is provided to enhance understanding of the background of the present invention and, thus, may include information that does not constitute the related art.

### SUMMARY

According to an aspect of embodiments of the present disclosure, a secondary battery capable of preventing or substantially preventing an electrode assembly from being inappropriately deformed after a formation process or during use is provided.

According to one or more embodiments, a secondary battery includes: an electrode assembly comprising a first electrode plate, a second electrode plate, and a separator, and wound to have a hollow part at a center thereof; a can having a cylindrical shape, of which a first surface (a top surface) is closed, and a second surface (a bottom surface) is open to accommodate the electrode assembly, the can being electrically connected to the first electrode plate; a cap plate coupled to the second surface of the can; and a terminal passing through the first surface of the can and comprising an inner portion supported inside the can (fixed to an inner surface of the top surface of the can) and an outer portion supported outside the can, the terminal being electrically connected to the second electrode plate, wherein the hollow part of the electrode assembly has a diameter less than a diameter of the inner portion of the terminal.

The diameter of the hollow part of the electrode assembly may be about 0.07 times to about 0.22 times a diameter of the can, preferably 0.09 times to 0.20 times, 0.11 times to 0.19 times, or 0.13 times to 0.17 times, more preferably 0.15 times.

The can may have a diameter of about 46 mm, and the diameter of the hollow part of the electrode assembly may be about 3 mm to about 10 mm, preferably 4 mm to 9 mm, 5 mm to 8 mm, more preferably 6 mm to 7 mm.

The diameter of the inner portion of the terminal may be less than that of the outer portion of the terminal.

The can may include a through-hole in the first surface thereof, and the terminal may be installed by being deformed to have a diameter greater than that of the through-hole after being inserted into the through-hole from the outside of the can in a state in which the inner portion of the terminal has a diameter less than that of the through-hole.

The first electrode plate may include a coating portion coated with an active material on a corresponding base material and a non-coating portion that is not coated with the active material, wherein the non-coating portion of the first electrode plate is arranged to face the second surface of the can, and the second electrode plate may include a coating portion coated with an active material on a corresponding base material and a non-coating portion that is not coated with the active material, wherein the non-coating portion of the second electrode plate is arranged to face the first surface of the can.

The can may be configured such that the first surface and a side surface extending from an edge of the first surface are integrated with each other.

The can may include: a beading part that is concavely recessed inward from a side surface to seat the cap plate; and a crimping part that is disposed lower than the beading part and bent inward to cover an edge of the cap plate at the side surface so as to fix the cap plate.

The cap plate may include a notch configured as a safety vent.

The secondary battery may further include a first current collector plate configured to electrically connect the first electrode plate to the can.

The first current collector plate may include: a flat portion having a shape corresponding to one surface (a bottom surface) of the electrode assembly; and an extension portion extending from the flat portion such that an edge thereof is in contact with the beading part of the can.

The secondary battery may further include a first gasket between the can and the cap plate.

The secondary battery may further include a second current collector plate configured to electrically connect the second electrode plate to the terminal.

The second current collector plate may be in contact with an inner portion of the terminal.

The secondary battery may further include a second gasket between the can and the terminal.

The secondary battery may further include a pin inserted in the hollow part of the electrode assembly.

### BRIEF DESCRIPTION OF THE DRAWINGS

The accompanying drawings are included to provide a further understanding of the present disclosure, and are incorporated in and constitute a part of this specification. The drawings illustrate some example embodiments of the present disclosure and, together with the description, serve to explain principles of the present disclosure. In the drawings:
FIG. 1 illustrates a cross-sectional view of a secondary battery according to one or more embodiment;
FIG. 2 illustrates an enlarged view of a region "A" of FIG. 1; and
FIG. 3 illustrates a schematic view of an alignment between a first electrode plate and a second electrode plate in the secondary battery according to one or more embodiments.

### DETAILED DESCRIPTION

Herein, some embodiments will be described in further detail with reference to the accompanying drawings.

Embodiments of the present invention may, however, be embodied in many different forms and should not be construed as being limited to the embodiments set forth herein; rather, these embodiments are provided so that those skilled in the art may thoroughly understand the present invention. Rather, these embodiments are provided so that this disclosure will be thorough and complete, and will fully convey the scope of the present disclosure to those skilled in the art.

In addition, in the following drawings, the thickness or size of each layer may be exaggerated for convenience and clarity of description, and the same reference numerals in the drawings refer to the same elements. As used herein, the term "and/or" includes any and all combinations of one or more of the associated listed items. In this specification, it is to be understood that if a member A is referred to as being connected to a member B, the member A may be directly connected to the member B or indirectly connected to the member B with one or more members C therebetween.

The terms used in this specification are for illustrative purposes of the present disclosure and should not be construed to limit the meaning or the scope of the present disclosure. As used in this specification, a singular form may, unless definitely indicating a particular case in terms of the context, include a plural form. Also, the expressions "comprise" and/or "comprising" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is to be understood that the members, components, areas, layers, and/or portions are not to be defined by these terms. The terms do not mean a particular order, up and down, or superiority, and are used for distinguishing one member, component, region, layer, or portion from another member, component, region, layer, or portion. Thus, a first member, component, area, layer, or portion described herein may also refer to a second member, component, area, layer, or portion, without departing from the teaching of the present invention.

Spatially relative terms, such as "below," "beneath," "lower," "above," "upper," , "top", "bottom" and the like, may be used herein for ease of description to describe one element or feature's relationship to another element(s) or feature(s), referring to the figures. These spatially relative terms are intended for ease of comprehension of the present invention according to various process states or usage states of the present invention, and, thus, the present disclosure is not limited thereto. In case of non-specified definitions of the terms, the spatially relative terms may refer to the directions shown in the drawings.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

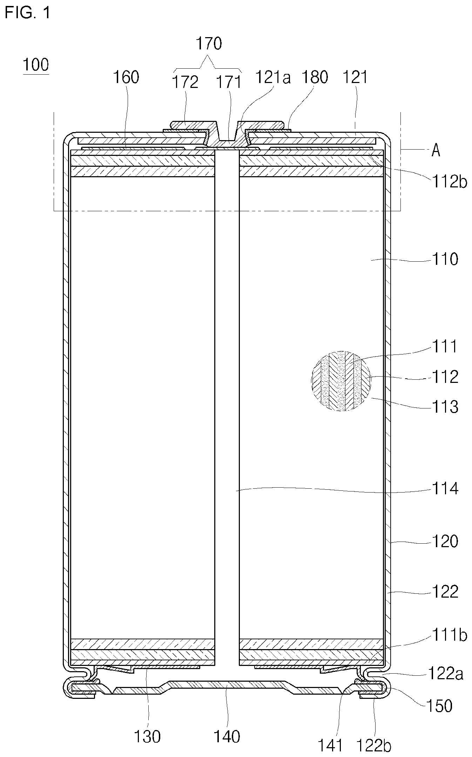

FIG. 1 illustrates a cross-sectional view of a secondary battery 100 according to one or more embodiments.

Referring to FIG. 1, the secondary battery 100 according to one or more embodiments may include an electrode assembly 110, a can 120, a first current collector plate 130, a cap plate 140, a first gasket 150, a second current collector plate 160, a terminal 170, and a second gasket 180.

The electrode assembly 110 may include a first electrode plate 111, a second electrode plate 112, and a separator 113.

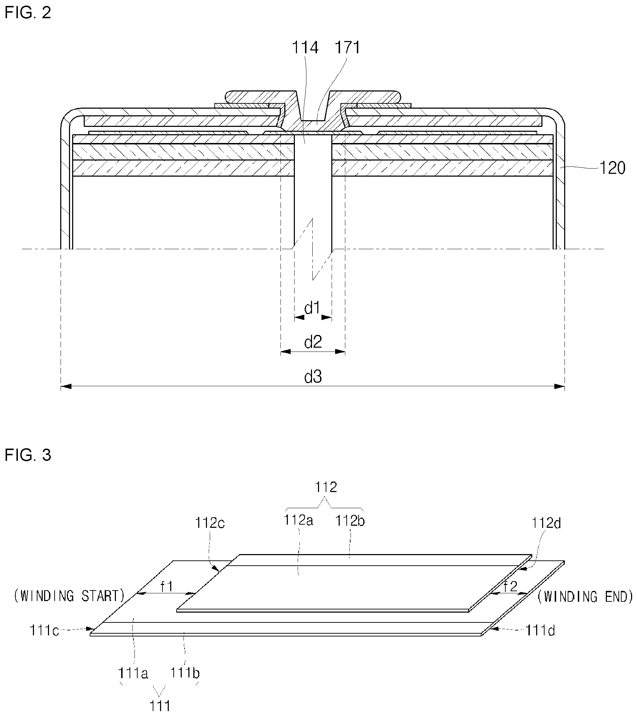

The first electrode plate 111 may be any one of a negative electrode plate and a positive electrode plate. For example, if the first electrode plate 111 is the negative electrode plate, the first electrode plate 111 may include a coating portion (negative electrode coating portion) 111a coated with an active material (negative electrode active material) on a base material (negative electrode base material) provided as a conductive metal thin plate, for example, copper or nickel foil or mesh, and a non-coating portion (negative electrode non-coating portion) 111b that is not coated with the negative electrode active material (see FIG. 3). For example, the negative electrode active material may include a carbon-based material, Si, Sn, tin oxide, a tin alloy composite, transition metal oxide, lithium metal nitrite, or metal oxide.

In FIG. 1, the negative electrode non-coating portion 111b may be disposed at a lower side such that the first electrode plate 111 is electrically connected to the can 120 through the first current collector plate 130. In some embodiments, the can 120 may have a negative polarity.

The second electrode plate 112 may be the other of the negative electrode plate and the positive electrode plate. For example, if the second electrode plate 112 is the positive electrode plate, the second electrode plate 112 may include a coating portion (positive electrode coating portion) 112a coated with an active material (positive electrode active material) on a base material (positive electrode base material) provided as a conductive metal thin plate, for example, copper or nickel foil or mesh, and a non-coating portion (positive electrode non-coating portion) 112b that is not coated with the positive electrode active material. The positive electrode active material may be made of a chalcogenide compound, for example, composite metal oxide, such as LiCoO₂, LiMn2O₄, LiNiO₂, LiNiMnO₂, and the like.

In FIG. 1, the positive non-coating portion 112b may be disposed at an upper side such that the second electrode plate 112 is electrically connected to the terminal 170 through the second current collector plate 160. In some embodiments, the terminal 170 may have a positive polarity.

The separator 113 may be interposed between the first electrode plate 111 and the second electrode plate 112 to prevent or substantially prevent a short circuit between the first electrode plate 111 and the second electrode plate 112. The separator 113 may be made of, for example, polyethylene, polypropylene, a porous copolymer of polyethylene and polypropylene, or the like.

The electrode assembly 110 may be provided by sequentially stacking the first electrode plate 111, the separator 113, and the second electrode plate 112, for example, by being wound such that a hollow part 114 is defined in a center by a mandrel.

In an embodiment, a separate pin (not shown) may be inserted into the hollow part 114 of the electrode assembly 110 to support the hollow part 114, thereby preventing or substantially preventing the hollow part 114 from being inappropriately deformed.

The can 120 may be provided in a cylindrical shape. In some embodiments, the can 120 may include a top surface 121 provided in a disk shape and a side surface 122 extending downward from an edge of the top surface 121. The can 120 may have an open bottom surface, and, thus, after the electrode assembly 110 is inserted together with an electrolyte into the can 120 through the bottom surface of the can 120, the bottom surface of the can 120 may be closed using the cap plate 140. The electrolyte may be a non-aqueous organic electrolyte that is a mixture of lithium salt and a high-purity organic solvent. In some embodiments, the electrolyte may be a polymer using a polymer electrolyte or a solid electrolyte.

In some embodiments, the can 120 may have the top surface 121 and the side surface 122 which are integrated with each other.

The can 120 may be made of, for example, steel, a steel alloy, aluminum, an aluminum alloy, etc.

The can 120 may include a through-hole 121a for installing the terminal 170 on the top surface 121. The through-hole 121a may be defined at a center of the top surface 121 of the can 120.

In some embodiments, the can 120 may include a beading part 122a and a crimping part 122b on the side surface 122. The beading part 122a may be configured to fix the electrode assembly 110 and seat the cap plate 140 and may be provided by concavely recessing a lower portion inward from the side surface 122 of the can 120. The crimping part 122b may be configured to fix the cap plate 140 and may be provided by bending a lower end inward from the side surface 122 of the can 120 to cover an edge of the cap plate 140.

The first current collector plate 130 may electrically connect the first electrode plate 111 of the electrode assembly 110 to the can 120. In some embodiments, the first current collector plate 130 may be welded to each of the non-coating portion 111b of the first electrode plate 111 of the electrode assembly 110 and the can 120. In some embodiments, the first current collector plate 130 may include a flat portion provided in a shape corresponding to a bottom surface of the electrode assembly 110 and an extension portion extending outward and upward from the flat portion. The flat portion may be fixed and electrically connected to the non-coating portion 111b of the first electrode plate 111 of the electrode assembly 110 by, for example, welding in a state of being in contact with the non-coating portion 111b of the first electrode plate 111 of the electrode assembly 110. In some embodiments, the extension portion may be fixed and electrically connected to the beading part 122a of the can 120 by, for example, welding in a state in which an edge thereof is in contact with the beading part 122a of the can 120. In some embodiments, the extension part may be fixed in a state in which the edge is interposed between the beading part 122a and the first gasket 150.

The cap plate 140 may be coupled to the bottom surface of the can 120. In some embodiments, in a state in which the electrode assembly 110 is accommodated in the can 120, the beading part 122a may be provided such that the lower portion of the side surface 122 of the can 120 is concavely recessed inward, and, then, the cap plate 140 may be seated on the beading part 122a, and the crimping part 122b is provided to be bent inward together with the first gasket 150 such that a lower end of the side surface 122 of the can 120 covers an edge of the cap plate 140, and, thus, the cap plate 140 may be installed.

In some embodiments, the cap plate 140 may include a notch 141 that functions as a safety vent. Therefore, if a gas is generated due to an abnormal operation of the secondary battery 100, and an internal pressure increases above a certain pressure, the cap plate 140 may be cut along the notch 141 by the pressure to release the gas, thereby preventing or substantially preventing explosion from occurring.

The first gasket 150 may be disposed between the can 120 and the cap plate 140 to prevent or substantially prevent the electrolyte from leaking to the outside or foreign substances (moisture, dust, etc.) from being introduced therein. The first gasket 150 may be made of, for example, polypropylene (PP), polyethylene (PE), ethylene propylene diene monomer (EPDM), or nitrile butadiene rubber (NBR).

The second current collector plate 160 may be disposed between the second electrode plate 112 and the terminal 170 of the electrode assembly 110 to electrically connect the second electrode plate 112 to the terminal 170. For this, the second current collector plate 160 may be provided in a shape corresponding to the top surface of the electrode assembly 110 so as to be fixed and electrically connected to the non-coating portion 112b of the second electrode plate 112 by, for example, welding in a state of being in contact with the non-coating portion 112b of the second electrode plate 112 of the electrode assembly 110 or be fixed and electrically connected to the terminal 170 by, for example, welding in a state of being in contact with the terminal 170.

The second current collector plate 160 may be made of, for example, aluminum.

The terminal 170 may be installed in the through-hole 121a of the top surface 121 of the can 120. The terminal 170 may be installed in, for example, a rivet manner. In some embodiments, the terminal 170 may be deformed such that a portion (inner portion) 171 of the terminal 170, which is inserted inward after inserted from the outside of the can 120 to the through-hole 121a, has a diameter greater than that of the through-hole 121a so as to be supported on and fixed to an inner surface of the top surface 121 of the can 120. In some embodiments, a portion (outer portion) 172 of the terminal 170, which is disposed outside the can 120, may be provided to have a diameter greater than that of the through-hole 121a and supported on an outer surface of the top surface 121 of the can 120 and also may be provided to have a relatively large diameter, for example, a diameter greater than that of the deformed inner portion 171 so as to be more stably supported on the top surface 121 of the can 120. In some embodiments, the terminal 170 may be deformed such that a portion (outer portion) 172, which protrudes outward after inserted from the inside of the can 120 to the through-hole 121a, has a diameter greater than that of the through-hole 121a so as to be supported on and fixed to an outer surface of the top surface 121 of the can 120. In some embodiments, a portion (inner portion) 171 of the terminal 170, which is disposed inside the can 120, may be provided to have a diameter greater than that of the through-hole 121a and supported on an inner surface of the top surface 121 of the can 120 and also may be provided to have a relatively large diameter, for example, a diameter greater than that of the deformed outer portion 172 so as to be more stably supported on the top surface 121 of the can 120. In the drawings, the former case may be illustrated, and the diameter of the inner portion 171 may be illustrated to be less than that of the outer portion 172.

The inner portion 171 of the terminal 170 may be welded to the second current collector plate 160.

The second gasket 180 may be disposed between the can 120 and the terminal 170 to electrically insulate the can 120 from the terminal 170 and prevent or substantially prevent the electrolyte from leaking to the outside or foreign substances (moisture, dust, etc.) from being introduced therein. The second gasket 180 may be made of, for example, PP, PE, or PET.

As the above-described secondary battery may be repeatedly charged and discharged, the electrode assembly may be improperly deformed. In some embodiments, a phenomenon in which the electrode plates droops downward may occur in an area adjacent to the hollow part, and, thus, the electrode plate that is initially aligned higher may have a same height as the electrode plate that is aligned lower or may have a height less than that of the electrode plate. In some embodiments, there is a limitation that lithium is precipitated due to a gap between the electrode plates.

As a first method to solve the above limitation, in the present disclosure, it is recognized that the larger the diameter of the hollow part of the electrode assembly, the more disadvantageous it is in terms of the above limitation, and, as a result, in the secondary battery 100 according to embodiments of the present disclosure, the diameter of the hollow part 114 of the electrode assembly 110 is provided to be relatively small.

In some embodiments, FIG. 2 illustrates an enlarged view of a region "A" of FIG. 1. Referring to FIG. 2, a diameter d1 of the hollow part 114 of the electrode assembly 110 may be relatively small and, in an embodiment, less than a diameter d2 of the inner portion 171 of the terminal 170.

In the viewpoint of preventing or substantially preventing the drooping, the smaller the diameter d1 of the hollow part 114 of the electrode assembly 110, the more advantageous, but, if the diameter d1 of the hollow part 114 of the electrode assembly 110 is too small, it may be difficult to realistically manufacture the mandrel for winding the electrode assembly 110. Therefore, in an embodiment, the diameter d1 of the hollow part 114 of the electrode assembly 110 may be about 3 mm or more, and, if a diameter d3 of the can 120 is about 46 mm, the diameter d1 of the hollow part 114 of the electrode assembly 110 may be about 0.07 times or more than the diameter d3 of the can 120.

In some embodiments, if the diameter d1 of the hollow part 114 of the electrode assembly 110 is too large, it may be excessively disadvantageous in the viewpoint of energy density, and, thus, in an embodiment, the diameter d1 of the hollow part 114 of the electrode assembly 110 may be about 0.22 times or less than the diameter d3 of the can 120, and, if the diameter d3 of the can 120 is about 46 mm, the diameter d1 of the hollow part 114 of the electrode assembly 110 may be about 10 mm or less.

Therefore, in some embodiments, the diameter d1 of the hollow part 114 of the electrode assembly 110 may be about 0.07 times to 0.22 times the diameter d3 of the can 120.

In some embodiments, as a second method to solve the above limitation, in the secondary battery 100 according to embodiments, a first end of the second electrode plate 112, which is close (proximal or relatively close) to the hollow part 114 (i.e., at which winding starts) may be relatively spaced apart from a first end of the first electrode plate 111, which is close (proximal or relatively close) to the hollow part 114 (at which the winding starts) toward a second end that is far (distal or relatively far) from the hollow part 114 (i.e., at which the winding is ended).

FIG. 3 illustrates a schematic view of an alignment between the first electrode plate 111 and the second electrode plate 112 in the secondary battery 100 according to one or more embodiments. Referring to FIG. 3, in one or more embodiments, the first electrode plate 111, the separator 113, and the second electrode plate 112 are sequentially stacked to manufacture the electrode assembly 110 (in FIG. 3, for clarity, the separator 113 is not shown), a first end 112c of the second electrode plate 112, which is close (proximal or relatively close) to the hollow part 114, may have a first offset f1 so as to be spaced apart from a first end 111c of the first electrode plate 111, which is close (proximal or relatively close) to the hollow part 114, toward a second end 111d, which is far (distal or relatively far) from the hollow part 114. In some embodiments, a second end 112d of the second electrode plate 112, which is far (distal or relatively far) from the hollow part 114, may have a second offset f2 so as to be spaced apart from the second end 111d of the first electrode plate 111, which is far from the hollow part 114, toward the first end 111c that is close to the hollow part 114. Here, the first offset f1 may be greater than the second offset f2.

As a result, the first end 112c of the second electrode plate 112 may be spaced relatively far from the first end 111c to the second end 111d of the first electrode plate 111 toward the second end 111d, and, thus, the second electrode plate 112 may not exist in at least one turn section starting from the hollow part 114 of the electrode assembly 110. In some embodiments, even if the first electrode plate 111 droops slightly, the lithium may be prevented or substantially prevented from being deposited due to the gap between the first electrode plate 111 and the second electrode plate 112.

In some embodiments, the first offset f1 may be about 1.5 times or more than the second offset f2. If the first offset f1 is less than about 1.5 times the second offset f2, the second electrode plate 112 may not be spaced sufficiently apart from the first electrode plate 111 such that the second electrode plate 112 does not exist in at least one turn section that starts from the hollow part 114 of the electrode assembly 110.

In some embodiments, if the first offset f1 is greater than about 3.5 times the second offset f2, it may be excessively disadvantageous in terms of energy density. Therefore, the first offset f1 may be about 3.5 times or less than the second offset f2.

In summary, the first offset f1 may be about 1.5 times to 3.5 times the second offset f2.

For example, if the diameter of the can 120 is about 46 mm, the first offset f1 is about 10 mm to about 50 mm, and a diameter of the mandrel for winding the electrode assembly 110 is about 8 mm, the first offset f1 may be about 25 mm, and the second offset f2 may be about 7.1 mm.

In the secondary battery according to embodiments of the present disclosure, in the electrode assembly, the end of the second electrode plate from the point at which the winding starts is spaced relatively far inward from the end of the first electrode plate to prevent or substantially prevent the electrode plates from drooping downward from the area adjacent to, in particular, the hollow part or prevent or substantially prevent the lithium from being precipitated due to a gap between the electrode plates.

The first method and the second method may be applied alone or together.

While some example embodiments of the secondary battery are provided herein, the present disclosure is not limited to the foregoing embodiments, and it is to be understood by those of ordinary skill in the art that various changes in form and details may be made therein without departing from the scope of the present disclosure as set forth by the following claims.

## Claims

1. A secondary battery (100) comprising:
an electrode assembly (110) comprising a first electrode plate (111), a second electrode plate (112), and a separator (113), and wound to have a hollow part (114) at a center thereof;
a can (120) having a cylindrical shape, of which a first surface is closed, and a second surface is open to accommodate the electrode assembly (110), the can (120) being electrically connected to the first electrode plate (111);
a cap plate (140) coupled to the second surface of the can (120); and
a terminal (170) passing through the first surface of the can (120) and comprising an inner portion (171) supported inside the can (120) and an outer portion (172) supported outside the can (120), the terminal (170) being electrically connected to the second electrode plate (112),
wherein the hollow part (114) of the electrode assembly (110) has a diameter less than a diameter of the inner portion (171) of the terminal (170).

2. The secondary battery (100) as claimed in claim 1, wherein the diameter of the hollow part (114) of the electrode assembly (110) is 0.07 times to 0.22 times a diameter of the can (120).

3. The secondary battery (100) as claimed in claim 1 or 2, wherein the can (120) has a diameter of 46 mm, and
the diameter of the hollow part (114) of the electrode assembly (110) is 3 mm to 10 mm.

4. The secondary battery (100) as claimed in any of the preceding claims, wherein the diameter of the inner portion (171) of the terminal (170) is less than a diameter of the outer portion (172) of the terminal (170).

5. The secondary battery (100) as claimed in any of the preceding claims, wherein the can (120) comprises a through-hole (121a) in the first surface thereof, and
the secondary battery is formed such that the terminal (170) is installed by being deformed to have a diameter greater than that of the through-hole (121a) after being inserted into the through-hole (121a) from the outside of the can (120) in a state in which the inner portion (171) of the terminal (170) has a diameter less than that of the through-hole (121a).

6. The secondary battery (100) as claimed in any of the preceding claims, wherein the first electrode plate (111) comprises a coating portion coated with an active material on a corresponding base material and a non-coating portion (111b, 112b) that is not coated with the active material, wherein the non-coating portion (111b, 112b) of the first electrode plate (111) is arranged to face the second surface of the can (120), and
the second electrode plate (112) comprises a coating portion coated with an active material on a corresponding base material and a non-coating portion (111b, 112b) that is not coated with the active material, wherein the non-coating portion (111b, 112b) of the second electrode plate (112) is arranged to face the first surface of the can (120).

7. The secondary battery (100) as claimed in any of the preceding claims, wherein the can (120) is configured such that the first surface and a side surface (122) extending from an edge of the first surface are integrated with each other.

8. The secondary battery (100) as claimed in any of the preceding claims, wherein the can (120) comprises:
a beading part (122a) that is concavely recessed inward from a side surface (122) to seat the cap plate (140); and
a crimping part (122b) that is bent inward to cover an edge of the cap plate (140) at the side surface (122) to fix the cap plate (140).

9. The secondary battery (100) as claimed in any of the preceding claims, wherein the cap plate (140) comprises a notch (141) configured as a safety vent.

10. The secondary battery (100) as claimed in any of the preceding claims, further comprising a first current collector plate (130) configured to electrically connect the first electrode plate (111) to the can (120).

11. The secondary battery (100) as claimed in claim 10, wherein the first current collector plate (130) comprises:
a flat portion having a shape corresponding to one surface of the electrode assembly (110); and
an extension portion extending from the flat portion such that an edge thereof is in contact with the beading part (122a) of the can (120).

12. The secondary battery (100) as claimed in any of the preceding claims, further comprising a first gasket (150) between the can (120) and the cap plate (140).

13. The secondary battery (100) as claimed in any of the preceding claims, further comprising a second current collector plate (160) configured to electrically connect the second electrode plate (112) to the terminal (170).

14. The secondary battery (100) as claimed in claim 13, wherein the second current collector plate (160) is in contact with an inner portion (171) of the terminal (170).

15. The secondary battery (100) as claimed in the preceding claims, further comprising a second gasket (180) between the can (120) and the terminal (170), and/or further comprising a pin inserted in the hollow part (114) of the electrode assembly (110).
